# EUROPEAN PATENT APPLICATION

(11) **EP 4 787 602 A1**
(43) Date of publication of application: **05.08.2026**
(21) Application number: 24881251.3
(22) Date of filing: 29.08.2024
(51) Int. Cl.: H01M 50/507, H01M 50/24, H01M 50/204, H01M 50/502, H01M 50/543, H01M 50/538, H01M 50/533, H01M 50/566

(54) **CONDUCTIVE BUSBAR AND POWER BATTERY**

(30) Priority: 25.10.2023 CN 202322877809 U
(71) Applicant: Sunwoda Mobility Energy Technology Co., Ltd., Shenzhen, Guangdong 518107 (CN)
(72) Inventor: WANG, Huawen, Shenzhen, Guangdong 518107 (CN); LIU, Xianhua, Shenzhen, Guangdong 518107 (CN); ZHOU, Guanyu, Shenzhen, Guangdong 518107 (CN); CHENG, Zhigang, Shenzhen, Guangdong 518107 (CN); LIU, Hai, Shenzhen, Guangdong 518107 (CN)
(74) Representative: Appleyard Lees IP LLP
(86) International application number: PCT/CN2024/115537
(87) International publication number: WO 2025/086883

(57) **Abstract**

A conductive busbar, comprising: a body (1), the body (1) extending in a first direction (X), and the body (1) comprising a first end portion (2) and a second end portion (3) connected in the first direction (X); a first folding portion (10) connected to the side of the first end portion (2) facing away from the second end portion (3); and a second folding portion (20) connected to the side of the second end portion (3) facing away from the first end portion (2), wherein the first folding portion (10) and the second folding portion (20) are both stacked with the body (1) in a second direction (Y), there is a gap between the first folding portion (10) and the second folding portion (20) in the first direction (X), and the first direction (X) intersects with the second direction (Y). A power battery comprising the conductive busbar.

## Description

### CROSS-REFERENCE TO RELATED APPLICATION

This application is filed on the basis of the Chinese patent application No. 202322877809.X filed October 25, 2023 and entitled "CONDUCTIVE BUSBAR AND POWER BATTERY PACK", and claims priority of the Chinese patent application, the entire contents of which are incorporated herein by reference.

### TECHNICAL FIELD

The present disclosure relates to the technical field of power battery pack, and in particular to a conductive busbar and a power battery pack.

### BACKGROUND

With the advancement of energy storage technology, power battery packs have been widely used in electrical equipment and have become an indispensable component of such equipment.

Currently, the series and parallel connections of battery cells in a power battery pack cannot be achieved without conductive busbars. Conductive busbars will not only carry current but also provide a certain level of structural strength. To meet sufficient current-carrying and strength requirements, the thickness and width of conductive busbars are typically designed to be relatively large.

However, when the conductive busbar is too thick, higher welding power is required, which imposes stricter demands on the welding process. When the conductive busbar is too wide, it may lead to insufficient overall space (or reduced available space), which may affect electrical clearance and creepage distance.

### SUMMARY

The present disclosure is to provide a conductive busbar and a power battery pack, which can alleviate at least one of the problems in the existing technologies.

To alleviate the aforementioned technical problems, the present disclosure is implemented as follows:
In a first aspect, an embodiment of the present disclosure provides a conductive busbar, which includes: a main body extending along a first direction, the main body including a first end portion and a second end portion connected along the first direction; a first folding portion connected to a side of the first end portion away from the second end portion, and a second folding portion connected to a side of the second end portion away from the first end portion, where both the first folding portion and the second folding portion are stacked with the main body along a second direction; and where the first folding portion and the second folding portion are spaced apart from each other along the first direction, and the first direction intersects with the second direction.

The conductive busbar is configured to connect battery cells in series or parallel. In practical applications, the conductive busbar not only serves as a current carrier but also needs to bear a certain structural strength. It is to be understood that both current-carrying and structural strength requirements necessitate the conductive busbar to have a certain thickness and width. In the embodiment of the present disclosure, the main body includes a first end portion and a second end portion arranged opposite to each other along the first direction, with a first folding portion and a second folding portion respectively connected to the second end portion and the first end portion. Both the first folding portion and the second folding portion are stacked with the main body. It can be understood that by arranging the first folding portion and the second folding portion spaced apart from each other, the battery cells can be connected to both the first folding portion and the second folding portion. This configuration extends the actual force transmission path of the conductive busbar (passing through the first folding portion to the first end portion, the second end portion, and then to the second folding portion), thereby enhancing the structural strength of the conductive busbar and improving the connection reliability with the battery cells. Additionally, due to the stacked feature, the thickness of each single-layer structure(the main body, the first folding portion, or the second folding portion) can be appropriately reduced. This allows the first folding portion and the second folding portion to meet the current-carrying requirement with thinner thicknesses without increasing the overall thickness or width of the conductive busbar. Furthermore, the conductive busbar can be welded to external devices via the first folding portion or the second folding portion, and the reduced single-layer thickness lowers the required welding power, thereby simplifying the manufacturing process.

It should be noted that the first folding portion and the second folding portion can be integrally formed with the main body or be separately fixed to the main body. Alternatively, one of the first folding portion and the second folding portion may be fixed to the main body while the other is integrally formed with the main body. This embodiment imposes no limitations in this regard.

In a second aspect, provided is a power battery pack in an embodiment of the present disclosure, which includes: the aforementioned conductive busbar; and a plurality of battery cells, where two adjacent battery cells are connected via the conductive busbar; where each of the battery cells includes a terminal, and the terminals of two adjacent battery cells are welded to the first folding portion and the second folding portion, respectively.

In the embodiment of the present disclosure, the power battery pack includes a plurality of battery cells, each of which includes a terminal. The terminal is configured to be welded to the conductive busbar to achieve a series or parallel connection of the battery cells. Specifically, the terminals of two adjacent battery cells are welded to the first folding portion and the second folding portion, respectively. In the embodiments of the present disclosure, the power battery pack equipped with the aforementioned conductive busbar features a stacked structure, allowing the thickness of single-layer structure (the main body, the first folding portion, or the second folding portion) to be appropriately reduced. This enables the first folding portion and second folding portion to meet current-carrying requirements with thinner thicknesses without increasing the overall thickness or width of the conductive busbar. Additionally, the reduced single-layer thickness helps lower welding power and simplifies the welding process. Furthermore, the corrugation in the connecting portion increases its length. Since the folding portions are welded to the terminals of battery cells, the force arm of the connection portion is extended and the stress on the conductive busbar is reduced. Such configuration provides the beneficial effect of enhancing the structural strength of the conductive busbar.

The foregoing description merely outlines the technical solutions of the present disclosure. In order to provide a clearer understanding of the technical means of the present disclosure so that they can be implemented in accordance with the description, and to make the above and other objectives, features, and advantages of the present disclosure apparent and comprehensible, embodiments of the present disclosure are provided below.

### BRIEF DESCRIPTION OF DRAWINGS

To more clearly illustrate the technical solutions in the embodiments of the present disclosure or the existing technologies, the following will briefly introduce the drawings required for describing the embodiments or the existing technologies. Obviously, the drawings in the following description are some embodiments of the present disclosure. For those of ordinary skill in the art, other drawings can be obtained from these drawings without inventive effort.
FIG. 1 is a schematic structural diagram of a conductive busbar in an embodiment of the present disclosure;
FIG. 2 is a schematic structural diagram of the conductive busbar from another perspective in an embodiment of the present disclosure;
FIG. 3 is a schematic structural diagram illustrating the connection between a conductive busbar and battery cells in an embodiment of the present disclosure;
FIG. 4 is a schematic structural diagram illustrating the connection between a conductive busbar and battery cells from another perspective in an embodiment of the present disclosure; and
FIG. 5 is a schematic structural diagram illustrating the connection between conductive busbars and battery cells in a power battery pack according to an embodiment of the present disclosure.

List of reference numerals:
1. main body; 2. first end portion; 3. second end portion; 4. first end surface; 10. first folding portion; 11. welding zone; 121. first welding hole; 20. second folding portion; 221. second welding hole; 30. connecting portion; 31. corrugation; 40. stacked portion; 50. mounting positioning hole; 60. battery cell; X. first direction; Y. second direction; and Z. third direction.

### DETAILED DESCRIPTION

The technical solutions in the embodiments of the present disclosure will be clearly and thoroughly described below with reference to the accompanying drawings in the embodiments of the present disclosure. It is apparent that the described embodiments are only part of the embodiments of the present disclosure, rather than all of them. Based on the embodiments of the present disclosure, all other embodiments obtained by those of ordinary skill in the art without inventive efforts shall fall within the scope of the present disclosure.

The terms "first," "second," and the like in the specification and claims of the present disclosure are used to distinguish similar objects and are not intended to describe a specific order or sequence. It should be understood that the data used in this manner may be interchanged under appropriate circumstances, so that the embodiments of the present disclosure can be implemented in orders other than those illustrated or described herein. Moreover, the objects distinguished by "first," "second," and the like are generally of the same category, and the number of the objects indicated is not limited. For example, a first object may be singular or plural. Furthermore, in the specification and claims, "and/or" indicates at least one of the associated objects before and after it, and the character "/" generally indicates that the associated objects before and after it are in an "or" relationship.

In the present disclosure, the term "parallel" encompasses not only situations of absolute parallelism but also those generally recognized in engineering as substantially parallel. For instance, "parallel" refers to the state where the angle formed between a line and another line, a line and a plane, or a plane and another plane ranges from -1° to 1°. Similarly, "perpendicular" includes not only situations of absolute perpendicularity but also those generally recognized in engineering as substantially perpendicular. For example, "perpendicular" refers to the state where the angle formed between a line and another line, a line and a plane, or a plane and another plane ranges from 89° to 91°. Equal distances or equal angles include not only situations of absolute equality but also those generally recognized in engineering as substantially equal, allowing for certain tolerances. For instance, the tolerance range may fall within -1% to 1%.

Below, the conductive busbar and the power battery pack provided by the embodiments of the present disclosure will be described in detail with reference to the accompanying drawings, specific embodiments, and their application scenarios.

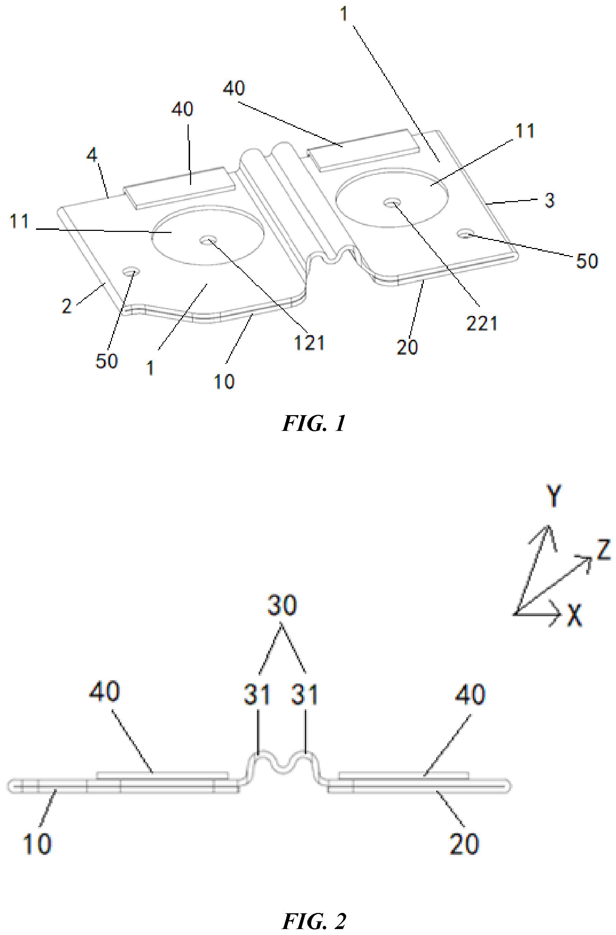

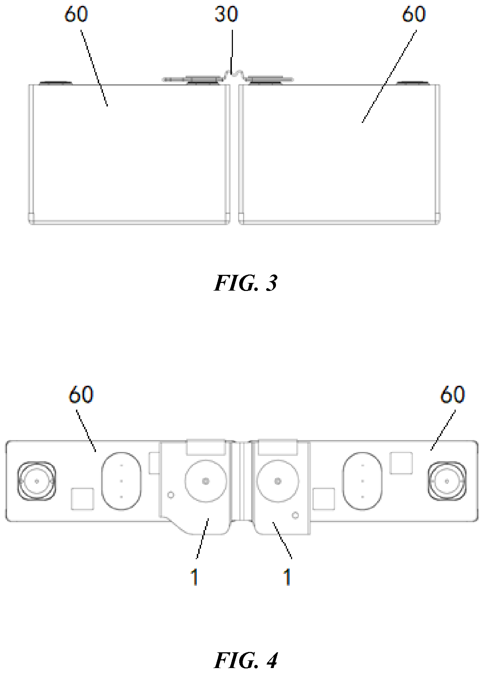

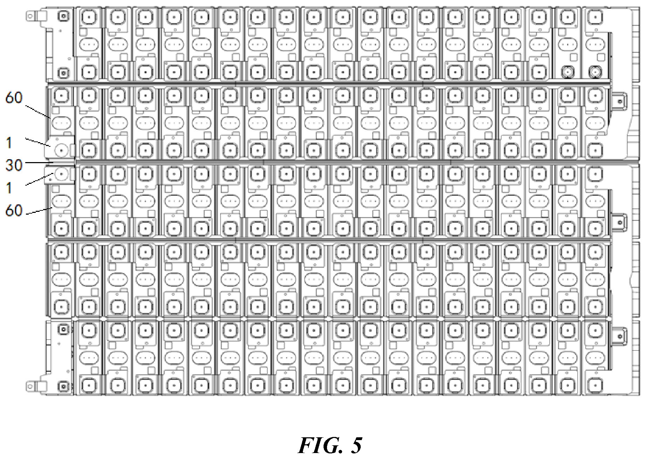

Referring to FIGS. 1 to 5, provided is a conductive busbar in an embodiment of the present disclosure. The busbar includes a main body 1 extending along a first direction X and including a first end portion 2 and a second end portion 3 connected along the first direction X; a first folding portion 10 connected to the first end portion 2 at a side thereof away from the second end portion 3; and a second folding portion 20 connected to the second end portion 3 at a side thereof away from the first end portion 2. Both the first folding portion 10 and the second folding portion 20 are stacked with the main body 1 along a second direction Y. The first folding portion 10 and the second folding portion 20 are spaced apart from each other along the first direction X, and the first direction X intersects with the second direction Y.

The conductive busbar is configured to connect battery cells 60 in series or parallel. In practical applications, the conductive busbar not only serves as a current carrier but also needs to bear a certain structural strength. It is to be understood that both current-carrying capacity and the provision of structural strength require the conductive busbar to have a certain thickness and width. In an embodiment of the present disclosure, the main body 1 includes the first end portion 2 and the second end portion 3 arranged opposite each other along the first direction X, with the first folding portion 10 and the second folding portion 20 connected to the first end portion 2 and the second end portion 3, respectively. Both the first folding portion 10 and the second folding portion 20 are stacked with the main body 1. It is to be understood that by arranging the second direction Y, the main body 1 is stacked with both the first folding portion 10 and the second folding portion 20, and the first folding portion 10 and the second folding portion 20 are spaced apart from each other along the first direction X. The battery cells 60 may be connected to the first folding portion 10 and the second folding portion 20, thereby extending the actual force transmission path of the conductive busbar (passing through the first folding portion 10 to the first end portion 2, the second end portion 3, and then to the second folding portion 20), thus enhancing the structural strength of the conductive busbar and the connection reliability with the battery cells 60. Additionally, due to the stacked structure, the thickness of the single-layer structure (i.e., the main body 1, the first folding portion 10, or the second folding portion 20) can be appropriately reduced. Such configuration allows the first folding portion 10 and the second folding portion 20 to meet the current-carrying requirement with thinner thicknesses without increasing the thickness and width of the conductive busbar, thereby improving the structural strength and current-carrying capacity of the conductive busbar. Moreover, the reduced thickness of the single-layer structure can lower the welding power, thereby reducing the difficulty of the machining processes.

The first folding portion 10 and the second folding portion 20 are spaced apart from each other along the first direction X. It should be noted that the first folding portion 10 and the second folding portion 20 may be integrally formed with the main body 1, or may be fixedly connected to the main body 1 separately. Alternatively, one of the first folding portion 10 and the second folding portion 20 may be fixedly connected to the main body 1, while the other is integrally formed with the main body 1, which is not limited thereto.

Specifically, in the aforementioned structure, the first folding portion 10 and the main body 1 may be integrally formed by bending, with the first end portion 2 and the first folding portion 10 connected via a bending section. The second folding portion 20 and the main body 1 may be integrally formed by bending, with the second end portion 3 and the second folding portion 20 connected via a bending section.

It should also be noted that the first folding portion 10 and the second folding portion 20 may be detachable from the main body 1, with a connection structure provided at the first end portion 2 to connect with the first folding portion 10, and a further connection structure provided at the second end portion 3 to connect with the second folding portion 20.

In an embodiment of the present disclosure, at least one of the first folding portion 10 and the second folding portion 20 is integrally formed with the main body 1.

In the embodiments of the present disclosure, the first folding portion 10 and the second folding portion 20 integrally formed with the main body 1 can enhance the connection strength among the main body 1, the first folding portion 10, and the second folding portion 20, thereby increasing the strength of the conductive busbar.

Furthermore, the first folding portion 10 and the second folding portion 20 integrally formed with the main body 1 can be produced in a single molding process during manufacturing, which offers the beneficial effects of improving production efficiency and reducing production costs.

It should be noted that the first folding portion 10 and the main body 1 may be integrally formed, or the second folding portion 20 and the main body 1 may be integrally formed, or both the first folding portion 10 and the second folding portion 20 may be integrally formed with the main body 1, which is not limited thereto.

In an embodiment of the present disclosure, the first folding portion 10 and the second folding portion 20 are attached to (i.e., contact) the same side of the main body 1 along the second direction Y.

In the embodiments of the present disclosure, the first folding portion 10 and the second folding portion 20 are disposed on the same side of the main body 1, and both the first folding portion 10 and the second folding portion 20 are attached to the main body 1 along the second direction Y. The first folding portion 10 and the second folding portion 20 arranged on the same side are provided to increase the thickness of the conductive busbar in the same direction and along the extending direction of the main body 1, thereby enhancing the strength stability of the conductive busbar and meeting current-carrying and strength requirements. Additionally, the arrangement of the first folding portion 10 and the second folding portion 20 extends the force transmission path of the conductive busbar (passing through the first folding portion 10 to the first end portion 2, the second end portion 3, and then to the second folding portion 20), thereby reducing the stress between the conductive busbar and the battery cells 60 and improving the connection reliability of the conductive busbar.

In an embodiment of the present disclosure, the conductive busbar further includes a connecting portion 30, which is arranged between the first end portion 2 and the second end portion 3. The connecting portion 30 includes a corrugation 31 that protrudes in the second direction Y away from the first folding portion 10 and the second folding portion 20.

In the embodiment of the present disclosure, the connecting portion 30 is arranged between the first end portion 2 and the second end portion 3 to connect the first end portion 2 and the second end portion 3. The connection portion 30 includes a corrugation 31, which protrudes along the second direction Y away from the first folding portion 10 and the second folding portion 20. The provision of the corrugation 31 increases the length of the connection portion 30, thereby extending the force arm of the connection portion 30. Since the force transmission path of the conductive busbar passes through the first folding portion 10 to the first end portion 2, the connection portion 30, the second end portion 3, and the second folding portion 20, the stress on the conductive busbar is reduced, thereby enhancing the structural strength of the conductive busbar.

Furthermore, the conductive busbar is configured to connect the battery cells 60 in series or parallel within a battery pack. The battery pack, as an energy-providing device, can be installed in various equipment, such as vehicles. The connection portion 30 with the corrugation 31 reduces the stress on the conductive busbar during vehicle vibration while driving. As a result, under the same driving conditions, the conductive busbar provided in the embodiments of the present disclosure has the beneficial effect of improved reliability.

A third direction Z is defined for the conductive busbar, which intersects both the first direction X and the second direction Y. In an embodiment of the present disclosure, the main body 1 defines a first end surface 4 located at least at one end of the main body 1 in the third direction Z. The conductive busbar also includes a stacked portion 40 extending along the second direction Y and the first direction X. In an embodiment, the stacked portion 40 connects the first end surface 4 and the first folding portion 10. Alternatively, the stacked portion 40 connects the first end surface 4 and the second folding portion 20.

In the embodiment of the present disclosure, the provision of the stacked portion 40 increases the current-carrying capacity of the conductive busbar without increasing the width or thickness of the main body 1, thereby ensuring the normal operation of the conductive busbar. The third direction Z is defined for the conductive busbar, which intersects both the first direction X and the second direction Y. The main body 1 defines a first end surface 4 located at least at one end of the main body 1 in the third direction Z. The stacked portion 40 is disposed on the first end surface 4 and extends along the first direction X and the second direction Y. In an embodiment, the stacked portion 40 connects the first end surface 4 and the first folding portion 10. Alternatively, the stacked portion 40 connects the first end surface 4 and the second folding portion 20. Specifically, when the battery cells 60 connected in series or parallel by the conductive busbar carry current, one battery cell 60 conducts the current to the main body 1 through the first folding portion 10, which then directs the current to the stacked portion 40. After flowing through the stacked portion 40 along the first direction X, the current is directed to the main body 1 again, and subsequently transferred to the main body 1 on the opposite side via the connecting portion 30. The current then sequentially flows through the stacked portion 40, the main body 1, and the second folding portion 20, finally reaching another battery cell 60. As described above, the provision of the stacked portion 40 achieves the beneficial effect of enhancing the current-carrying capacity of the conductive busbar without increasing its width or thickness.

In an embodiment of the present disclosure, along the second direction Y, the stacked portion 40 covers at least part of the main body 1, and/or the stacked portion 40 and the main body 1 are integrally formed.

In the embodiments of the present disclosure, the stacked portion 40 may cover at least part of the main body 1 along the second direction Y. Specifically, in practical applications, the coverage area and size of the stacked portion 40 may be adjusted according to actual conditions to achieve the objectives of not affecting the thickness of the welding zone 11 and increasing the current-carrying capacity of the conductive busbar. In an embodiment of the present disclosure, the stacked portion 40 and the main body 1 may be integrally formed. The stacked portion 40, being integrally formed with the main body 1, enhances the connection strength between the main body 1 and the stacked portion 40, thereby increasing the overall strength of the conductive busbar. Such configuration not only improves the current-carrying capacity of the conductive busbar but also provides the beneficial effect of reinforcing its structural strength.

In an embodiment of the present disclosure, at least one of the first end portion 2 and the second end portion 3 is provided with a welding zone 11. Along the second direction Y, a projection of the welding zone 11 on a plane perpendicular to the second direction Y at least partially overlaps with a projection of the first folding portion 10 or the second folding portion 20 on the plane perpendicular to the second direction Y.

In the embodiments of the present disclosure, the welding zone 11 is configured to provide space for welding between the conductive busbar and the battery cells 60, as well as to accommodate solder generated after welding. The welding zone 11 is formed on at least one of the first end portion 2 and the second end portion 3. It is to be understood that the welding zone 11 may be formed on the first end portion 2 merely, the second end portion 3 merely, or both the first end portion 2 and the second end portion 3, which is not limited in this embodiment. The welding zone 11 on the first end portion 2 is configured to provide space for welding one battery cell 60, and the welding zone 11 on the second end portion 3 is configured to provide space for welding another battery cell 60. Specifically, the projection of the welding zone 11 on the plane perpendicular to the second direction Y may at least partially overlap with the projection of the first folding portion 10 on the plane perpendicular to the second direction Y. Alternatively, the projection of the welding zone 11 on the plane perpendicular to the second direction Y may at least partially overlap with the projection of the second folding portion 20 on the plane perpendicular to the second direction Y. It should be noted that the welding zone 11 may be a welding hole or a welding groove, as long as it enables welding between the main body 1 and the first folding portion 10 or between the main body 1 and the second folding portion 20, which is not limited in this embodiment. Furthermore, since the welding zone 11 may be a welding hole or a welding groove, the welding zone 11 and the first folding portion 10 or the second folding portion 20 enclose to form an accommodating cavity. The accommodating cavity is defined to provide a space for accommodating the solder generated after welding. In practical applications, since the welding zone(s) 11 is/are opened on the main body 1, the actual welding thickness required along the second direction Y is the thickness of the first folding portion 10 or the second folding portion 20. Thus, compared to the welding thickness being the combined thickness of the main body 1 and the first folding portion 10 or the combined thickness of the main body 1 and the second folding portion 20, the welding thickness being only the thickness of the first folding portion 10 or the second folding portion 20 allows to effectively reduce the welding power and lower the difficulty of the welding process. The embodiments of the present disclosure have the beneficial effect of reducing the great difficulty of the welding process.

In an embodiment of the present disclosure, the first folding portion 10 defines a first welding hole 121 extending through the first folding portion 10 along the second direction Y, and the first welding hole 121 and the welding zone 11 are arranged facing each other in the second direction Y. Additionally or alternatively, the second folding portion 20 defines a second welding hole 22 extending through the second folding portion 20 along the second direction Y, and the second welding hole 221 and the welding zone 11 are arranged facing each other in the second direction Y.

In the embodiments of the present disclosure, the first welding hole 121 and the second welding hole 221 are provided to offer pre-welding fitting positions for terminals of the battery cells 60. The terminals are inserted into the first welding hole 121 or the second welding hole 221, followed by welding. The first welding hole 121 extends through the first folding portion 10 along the second direction Y, and the second welding hole 221 extends through the second folding portion 20 along the second direction Y. Moreover, both the first welding hole 121 and the second welding hole 221 overlap with at least part of a corresponding one of the welding zones 11. It is to be understood that, in practical applications, in a case where both the first end portion 2 and the second end portion 3 define their respective welding zones 11, since the welding zones 11 are formed on the main body 1, the first welding hole 121 is formed on the first folding portion 10, and the second welding hole 221 is formed on the second folding portion 20, the first welding hole 121 and the welding zone 11 on the first end portion 2 are arranged facing each other along the second direction Y, and the second welding hole 221 and the welding zone 11 on the second end portion 3 are also arranged facing each other along the second direction Y. During welding, it is only necessary to weld at the first welding hole 121 or the second welding hole 221. Furthermore, the welding thickness along the second direction Y is only the welding thickness of the first folding portion 10 or the second folding portion 20. Therefore, compared to the welding thickness being the combined thickness of the main body 1 and the first folding portion 10 or the combined thickness of the main body 1 and the second folding portion 20, the welding thickness being only that of the first folding portion 10 or the second folding portion 20 can effectively reduce the welding power and lower the difficulty of the welding process. The embodiments of the present disclosure have the beneficial effect of reducing the great difficulty of the welding process.

It should be noted that the terminals inserted into the first welding hole 121 and the second welding hole 221 belong to different battery cells 60. Different battery cells 60 are connected through the terminals and the conductive busbar to achieve series or parallel connections between the battery cells 60.

In an embodiment of the present disclosure, at least one of the first end portion 2 and the second end portion 3 defines a mounting positioning hole 50. The mounting positioning hole 50 and the welding zone 11 are spaced apart from each other, and the mounting positioning hole 50 at least extends through a side of the main body 1 away from the first folding portion 10 or the second folding portion 20.

In the embodiments of the present disclosure, the mounting positioning hole 50 is provided to engage with the battery cell 60 before welding, thereby enhancing the alignment stability between the battery cell 60 and the conductive busbar prior to welding, which offers the beneficial effect of improving welding stability. It should be noted that the mounting positioning hole 50 and the welding zone 11 are spaced apart from each other. Such arrangement serves to prevent the solder generated during welding from clogging the mounting positioning hole 50. Additionally, the mounting positioning hole 50 is positioned to correspond to a positioning feature on the battery cell 60. To ensure alignment with the positioning feature on the battery cell 60, the mounting positioning hole 50 at least extends through a side of the main body 1 away from the first folding portion 10 or the second folding portion 20.

In an embodiment of the present disclosure, the conductive busbar further includes a conductive adhesive layer, where the conductive adhesive layer is sandwiched between the first folding portion 10 and the first end portion 2; and/or, the conductive adhesive layer is sandwiched between the second folding portion 20 and the second end portion 3.

In an embodiment of the present application, the conductive adhesive layer may be sandwiched between the first folding portion 10 and the first end portion 2. In another embodiment of the present application, the conductive adhesive layer may be sandwiched between the second folding portion 20 and the second end portion 3. In yet another embodiment of the present application, the conductive adhesive layer may be sandwiched between the first folding portion 10 and the first end portion 2, as well as between the second folding portion 20 and the second end portion 3. The embodiments of the present disclosure impose no limitations in this regard. The arrangement of the conductive adhesive layer can increase the contact area between the first folding portion 10 and the first end portion 2, as well as between the second folding portion 20 and the second end portion 3, thereby enhancing the current-carrying capacity between the first folding portion 10 and the first end portion 2, and between the second folding portion 20 and the second end portion 3.

A power battery pack is also provided in an embodiment of the present disclosure. The power battery pack includes the conductive busbar as described above; and a plurality of battery cells 60; where each of the battery cells 60 includes a terminal, and the terminals of two adjacent battery cells 60 are welded to the first folding portion 10 and the second folding portion 20, respectively.

In the embodiments of the present disclosure, the power battery pack includes a plurality of battery cells 60, and each of the battery cells 60 includes a terminal. The terminals are configured to be welded to the conductive busbar to achieve a series or parallel connection of the battery cells 60. Specifically, the terminals of two adjacent battery cells 60 are welded to the first folding portion 10 and the second folding portion 20, respectively. In the embodiments of the present disclosure, the power battery pack equipped with the aforementioned conductive busbar features a stacked structure, allowing the thickness of each single-layer structure (the main body 1, the first folding portion 10, or the second folding portion 20) to be appropriately reduced. This design enables the thinner thicknesses of the first folding portion 10 and second folding portion 20 to meet current-carrying requirements without increasing the thickness or width of the conductive busbar. In addition, the reduced single-layer thickness helps lower welding power and simplifies the welding process. Furthermore, welding the first folding portion 10 and the second folding portion 20 to the terminals extends the force transmission path between adjacent terminals, reduces stress, and thereby enhances the connection reliability between the terminals and the conductive busbar. Furthermore, the arrangement of the corrugation 31 in the connection portion 30 increases the length of the connection portion 30, thereby extending the force arm of the connection portion 30 and reducing the stress on the conductive busbar. Such configuration provides the beneficial effect of enhancing the structural strength of the conductive busbar.

It should be noted that, in this document, the terms "comprising," "including," or any other variations thereof are intended to cover non-exclusive inclusion, such that a process, method, article, or device that includes a series of elements not only includes those elements but also other elements not explicitly listed or inherent to such process, method, article, or device. Without further limitations, an element defined by the phrase "comprising a..." does not exclude the presence of additional identical elements in the process, method, article, or device that includes said element. Furthermore, it should be noted that the scope of the methods and apparatus in the embodiments of the present disclosure is not limited to performing functions in the order shown or discussed. It may also include performing functions in a substantially simultaneous manner or in reverse order based on the functions involved. For example, the described methods may be executed in an order different from that described, and various steps may also be added, omitted, or combined. Additionally, features described with reference to certain embodiments may be combined in other embodiments.

The embodiments of the present disclosure have been described above in conjunction with the accompanying drawings. However, the present disclosure is not limited to the specific implementations described above. The aforementioned specific implementations are merely illustrative and not restrictive. Under the teaching of the present disclosure, those of ordinary skill in the art can make various modifications without departing from the gist of the present disclosure and the scope claimed by the claims. All such modifications shall fall within the scope of the present disclosure.

## Claims

1. A conductive busbar, comprising:
a main body (1), wherein the main body (1) extends along a first direction (X), and the main body (1) comprises a first end portion (2) and a second end portion (3) connected along the first direction (X);
a first folding portion (10), connected to a side of the first end portion (2) away from the second end portion (3); and
a second folding portion (20), connected to a side of the second end portion (3) away from the first end portion (2);
wherein both the first folding portion (10) and the second folding portion (20) are stacked with the main body (1) along a second direction (Y); and
wherein, the first folding portion (10) and the second folding portion (20) are spaced apart from each other along the first direction (X), and the first direction (X) intersects with the second direction (Y).

2. The conductive busbar according to claim 1, wherein the first folding portion (10) is integrally formed with the main body (1).

3. The conductive busbar according to claim 1, wherein the second folding portion (20) is integrally formed with the main body (1).

4. The conductive busbar according to claim 1, wherein the first folding portion (10) and the second folding portion (20) are attached to the same side of the main body (1) along the second direction (Y).

5. The conductive busbar according to claim 1, further comprising a connecting portion (30), wherein the connecting portion (30) is connected between the first end portion (2) and the second end portion (3), and the connecting portion (30) comprises a corrugation (31), the corrugation (31) protrudes along the second direction (Y) away from the first folding portion (10) and the second folding portion (20).

6. The conductive busbar according to claim 1, wherein a third direction (Z) is defined for the conductive busbar, the third direction (Z) intersects both the first direction (X) and the second direction (Y), and the main body (1) defines a first end surface (4) located at least at one end of the main body in the third direction (Z); and
the conductive busbar further comprises a stacked portion (40) extending along the second direction (Y) and the first direction (X), wherein the stacked portion (40) connects the first end surface (4) and the first folding portion (10).

7. The conductive busbar according to claim 1, wherein a third direction (Z) is defined for the conductive busbar, the third direction (Z) intersects both the first direction (X) and the second direction (Y), and the main body (1) defines a first end surface (4) located at least at one end of the main body in the third direction (Z); and
the conductive busbar further comprises a stacked portion (40) extending along the second direction (Y) and the first direction (X), wherein the stacked portion (40) connects the first end surface (4) and the second folding portion (20).

8. The conductive busbar according to claim 6 or 7, wherein along the second direction (Y), the stacked portion (40) covers at least part of the main body (1).

9. The conductive busbar according to claim 6 or 7, wherein the stacked portion (40) is integrally formed with the main body (1).

10. The conductive busbar according to claim 1, wherein the first end portion (2) defines a welding zone (11);
along the second direction (Y), a projection of the welding zone (11) on a plane perpendicular to the second direction (Y) at least partially overlaps with a projection of the first folding portion (10) on the plane perpendicular to the second direction (Y).

11. The conductive busbar according to claim 10, wherein the first folding portion (10) defines a first welding hole (121), the first welding hole (121) extends through the first folding portion (10) along the second direction (Y), and the first welding hole (121) and the welding zone (11) are arranged facing each other in the second direction (Y).

12. The conductive busbar according to claim 10, wherein the first end portion (2) defines a mounting positioning hole (50);
the mounting positioning hole (50) and the welding zone (11) are spaced apart from each other, and the mounting positioning hole (50) at least extends through a side of the main body (1)away from the first folding portion (10).

13. The conductive busbar according to claim 1, wherein the second end portion (3) defines a welding zone (11); and
a projection of the welding zone (11) on a plane perpendicular to the second direction (Y) along the second direction (Y) at least partially overlaps with a projection of the second folding portion (20) on the plane perpendicular to the second direction (Y) along the second direction (Y).

14. The conductive busbar according to claim 13, wherein the second folding portion (20) defines a second welding hole (221), the second welding hole (221) extends through the second folding portion (20) along the second direction (Y), and the second welding hole (221) and the welding zone (11) are arranged facing each other in the second direction (Y).

15. The conductive busbar according to claim 13, wherein the second end portion (3) defines a mounting positioning hole (50);
the mounting positioning hole (50) and the welding zone (11) are spaced apart from each other, and the mounting positioning hole (50) at least extends through a side of the main body (1)away from the second folding portion (20).

16. The conductive busbar according to claim 1, further comprising a conductive adhesive layer; wherein the conductive adhesive layer is sandwiched between the first folding portion (10) and the first end portion (2).

17. The conductive busbar according to claim 1, further comprising a conductive adhesive layer; wherein the conductive adhesive layer is sandwiched between the second folding portion (20) and the second end portion (3).

18. A power battery pack, comprising:
the conductive busbar according to any one of claims 1 to 17; and
a plurality of battery cells (60); each of the battery cells (60) comprises a terminal, and the terminals of two adjacent battery cells (60) are respectively welded to the first folding portion (10) and the second folding portion (20).
